# EUROPEAN PATENT SPECIFICATION

(11) **EP 1 638 093 B1**
(45) Date of publication and mention of the grant of the patent: **22.10.2008**
(21) Application number: 05255756.8
(22) Date of filing: 16.09.2005
(51) Int. Cl.: G11B 7/095

(54) **Tilt compensation method for optical recording/reproducing apparatus**
Verfahren zum Neigungsausgleich für optisches Aufzeichnungs- und Wiedergabegerät
Méthode de compensation d'inclinaison pour un appareil d'enregistrement et de reproduction optique

(30) Priority: 18.09.2004 KR 2004074791
(43) Date of publication of application: 22.03.2006
(73) Proprietor: Samsung Electronics Co., Ltd., Suwon-si, Gyeonggi-Do (KR)
(72) Inventor: Kim, Min-seok, c/o Samsung Electronics Co., Ltd.,, Suwon-si, Gyeonggi-do, (KR); Kang, Kyung-pil, Gwanak-gu, Seoul, (KR)
(74) Representative: Robinson, Ian Michael

(56) References cited:
- EP-A- 1 162 610
- JP-A- 10 083 537
- JP-A- 10 177 729

## Description

The present invention relates to an optical recording/reproducing apparatus. More particularly, the present invention relates to a tilt compensation method for an optical recording/reproducing apparatus.

A tilt is defined as a situation where the information-recording surface of a disk is inclined. The tilt may be caused by the optical disk being warped or transformed. A laser light beam from an optical pick-up should be substantially perpendicularly emitted with regard to the information-recording surface of a disk. When the tilt of the disk occurs, however, a spot from a laser light source of the optical pick-up is distorted on the information-recording surface of the disc by such that light emission per unit area on the information-recording surface of disk is reduced. Accordingly, the effective size of a pit gets smaller to generate a jitter when information is reproduced. Especially, when an optical disk, such as DVD or CD-RW for recording a high density information is tilted, an error is produced depending on the tilt degree when the information is recorded and reproduced, and if the tilt degree is extreme, it is difficult to record or reproduce the information.

Generally, a tilt sensor is mounted with an optical pick-up, or light reflected from an information-recording surface of disk is used to detect the degree of tilt. The required tilt compensation is calculated based on the detected tilt degree, and the optical pick-up or an objective lens in the optical pick-up is inclined based on the calculated tilt compensation. There are a variety of tilt compensation methods generally known.

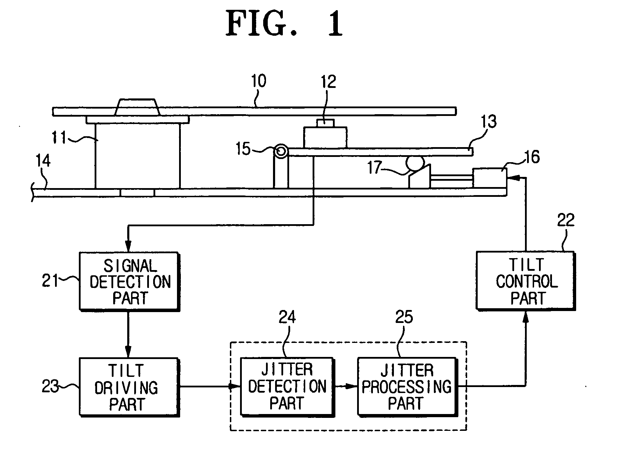

Figure 1 is a schematic view of an example of a tilt compensation mechanism applied to an optical recording/reproducing apparatus for implementing a conventional tilt compensation method.

As shown, a disk 10 is seated on a spindle motor 11 to be rotated, and a deck 13 having an optical pick-up 12 is pivotably engaged with a hinge point 15 of a base plate 14. A power convert member 17 is disposed between a tilt motor 16 mounted on the base plate 14 and the deck 13, to convert the power of the tilt motor 16 into ascending and descending movement.

A signal detection part 21 is engaged with the optical pick-up 12, and a tilt driving part 22 is engaged with the tilt motor 16. The signal detected from the signal detection part 21 is input to a jitter detection part 23, the signal of the jitter detection part 23 is input via the jitter processing part 24 to a tilt control part 25, and the signal of the tilt control part 25 is transmitted to the tilt driving part 22 to drive the tilt motor 16 forward or backward such that a tilt is compensated. In other words, the optical pick-up 12 is inclined according to tilt degree of a disk to a position in exact perpendicular relation to the information-recording surface of disk.

Besides the above-mentioned tilt compensation method, various methods for compensating tilt are well known, however, there are few for satisfying the primary concept of tilt compensation. That is, tilt compensation actually means that physical defects of a disk, which are beyond the control of an optical recording/reproducing apparatus, are offset by adjustment of controllable optical pick-up. The existing methods, however, approach tilt compensation by using a reproduced signal, without satisfying the primary concept.

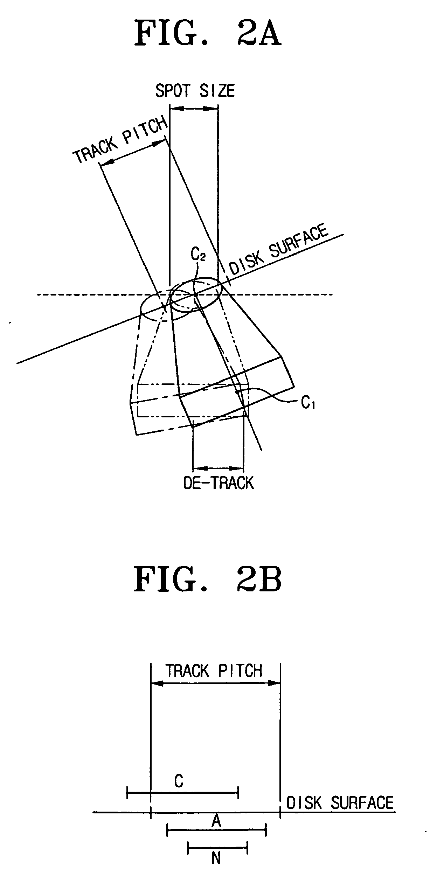

More specifically, the tilt compensation using a reproduced signal tries to make spot size the largest on the information-recording surface of disk. It is very clear that optimum reproduction is accomplished when the spot size is the largest. In Figure 2B, a spot C is formed on the information-recording surface of disk by a conventional tilt compensation method. As shown, the spot C is wider than a spot N without tilt compensation, however, partially stretched out of a track pitch. As such, a reproduced and recorded signal may be superior to that of the spot N, but inferior to that of a spot A which has a tilt compensation according to the present invention which will be explained later.

When a conventional tilt compensation method as mentioned above is applied, there may be various causes for the spot C to extend out of the track pitch, however, one of the main causes can occur when a center C1 of the optical pick-up 12 is not aligned with curvature center C2 of a disk surface 10S on which the optical pick-up 12 is located.

As aforementioned, a conventional tilt compensation method has a limit to compensate a tilt so that it can not apply to a disk having an excessive tilt. Also, optimal tilt compensation can not be implemented so that image of an optical recording/reproducing apparatus is not improved.

JP-A-10-083537 discloses a tilt correcting method for an optical disc drive device. The pre-characterising portion of the appended claims is based on this document.

According to the present invention there is provided a method as set forth in the appended claims. Preferred features of the invention will be apparent from the dependent claims, and the description which follows.

Aspects and/or advantages of the invention will be set forth in part in the description which follows and, in part, will be apparent from the description, or may be learned by practice of the invention.

The present invention has been conceived to address the above-mentioned problems occurring in the prior art. An aspect of the present invention is to provide a tilt compensation method of an optical recording/reproducing apparatus which can implement an optimal tilt compensation by not only signal compensation, but also by mechanical compensation which aligns the center of an optical pick-up with the curvature center of a disk surface where the optical pick-up is located.

In one aspect of the present invention there is provided a tilt compensation method of an optical recording and reproducing apparatus which inclines an optical pick-up depending on degrees of tilt to a position substantially perpendicular to a disk surface, the tilt compensation method including calculating a center of curvature of disk surface on which the optical pick-up is located to de-track the optical pick-up to align the center of curvature with the optical axis of the optical pick-up.

Preferably, the de-tracking includes a positive de-tracking process which proceeds in a direction of an outer circumference of the disk, and a negative de-tracking process which proceeds in a direction of a center direction of the disk, and if the curvature of the disk surface is concave, the positive de-tracking process is performed, and if the curvature of disk surface is convex, the negative de-tracking process is performed.

Preferably, the de-tracking proceeds until satisfaction of all or one of: a condition for optimum spot size focused on information-recording surface of disk surface, a condition for a least jitter detection, a condition for a least byte error rate (BER) detection, and a condition for a maximum RF envelope detection.

The tilt compensation method according to an embodiment of the present invention, further comprises the step of checking if a spot focused on a track deviates out of the track during de-tracking, and if so, the de-tracking is repeated from an initial step.

The above and other aspects, features and advantages of the present invention will be more apparent from the following detailed description taken with reference to the accompanying drawings, in which:
Figure 1 is a schematic view of a tilt compensation mechanism applied to a conventional optical recording and reproducing apparatus;
Figures 2A and 2B are views comparing sizes and positions of optical spot focused on a disk surface between the conventional case and an embodiment of the present invention;
Figure 3A is a schematic view of an example of movement of an optical pick-up according to a conventional tilt compensation method;
Figure 3B is a view of an example of movement of an optical pick-up according to an embodiment of the present invention; and
Figure 4 is a flow chart of a tilt compensation method according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

Certain embodiments of the present invention will be described in greater detail with reference to the accompanying drawings.

In the following description, same drawing reference numerals are used for the same elements even in different drawings. The matters defined in the description such as a detailed construction and elements are provided to assist in a comprehensive understanding of the invention. Thus, it is apparent that the present invention can be carried out without those defined matters. Also, well-known functions or constructions are not described in detail since they would obscure the invention in unnecessary detail.

Figure 2A and Figure 2B show a primary concept of tilt compensation which is proposed by the present invention. The discussion related to signal compensation focus on Figure 2B. That is, the signal tilt compensation tries to make a diameter of spot focused on a disk surface the largest. The discussion related to mechanical compensation focus on Figure 2A. Those suggestions align a center of an optical pick-up 12 with a curvature center of a disk surface 10S.

In Figures 2A and 2B, an alternate long and two short dashes line shows a spot without a tilt compensation, an alternate long and one short dash line shows a spot according to a conventional tilt compensation method, and a solid line shows a spot based on a tilt compensation method according to an embodiment of the present invention which will be in detail explained later. As can be seen from Figures 2A and 2B, the spot size according to a conventional tilt compensation method is greater, compared to when tilt is not compensated. However, the spot according to a conventional tilt compensation method partially extends out of the track pitch. Accordingly, it is clear that a reproduced and recorded signal based on a conventional tilt compensation method is inferior to that based on the tilt · compensation method according to the present invention, which has the widest spot within the track pitch.

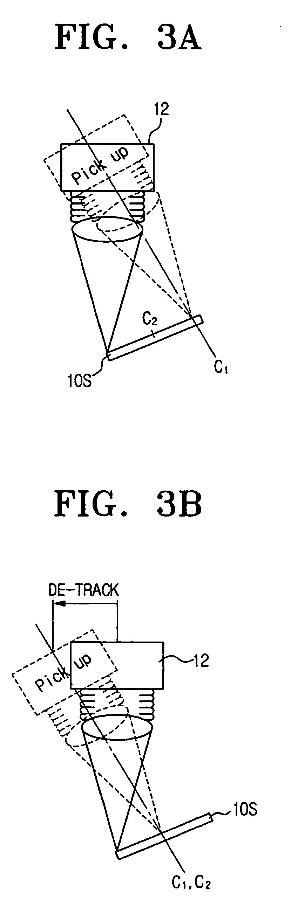

Figure 3B shows de-tracking to align a center C1 of the optical pick-up with a curvature center C2 of a disk surface 10S, with the optical pick-up 12 being inclined according to tilt degree of disk surface 10S by use of a conventional tilt compensation method of Figure 3A.

The present invention implements not only signal-based a tilt compensation which enlarges the spot size, but also a mechanism-based tilt compensation which de-tracks an optical pick-up to focus the spot within the track pitch, and mainly includes: a mechanism for aligning a center of optical pick-up with a center of curvature center of disk surface by use of de-track; and an algorithm for enlarging an optical spot to the maximum when the optical spot is focused on a disk track surface.

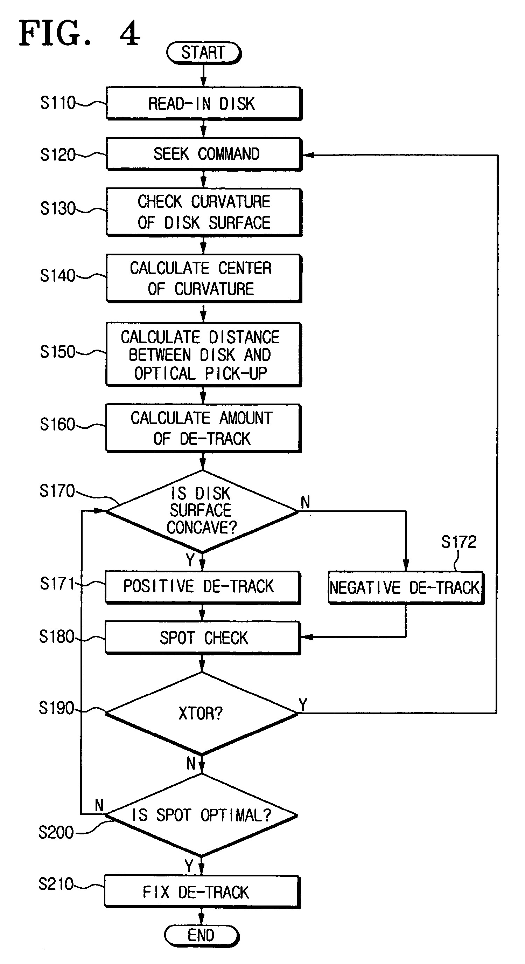

Figure 4 is a flow chart for schematically showing a concept of a tilt compensation method of optical recording/reproducing apparatus according to an embodiment of the present invention. The present invention will be explained in more detail with reference to Figure 4.

First, in the step of reading-in a disk (S110), necessary information for implementing a tilt compensation method according to an embodiment of the present invention, such as vertical distance between the disk 10 and the optical pick-up 12 and curvature information of the disk surface 10S, is calculated. The vertical distance between the disk and the optical pick-up can be easily calculated by use of a known mechanism. The curvature of the disk surface can also be calculated based on a method which can implement the most suitable effect for optical writing/reading among the existing signal-based tilt compensation methods.

There are various methods for calculating the curvature of disk surface, but the present embodiment adopts a conventional method which calculates distances from a structurally fixed horizontal surface from several points of the disk, during disk read-in, for speedy and convenient compensation of tilt. By doing so, information necessary for the present invention can be obtained prior to actual tilt compensation.

After disk read-in (S110), a command to record or reproduce is transmitted to a servo by a user, and the servo performs a seek command (S120). While performing the seek command, the servo checks a relevant address, which is curvature information on a searched track (S130). As aforementioned, the control part already knows the necessary information. Accordingly, the control part conventionally calculates a center of curvature of the portion (S140) by use of the curvature information on the track, calculates a distance between the disk and the optical pick-up (S150), and determines length of de-track of the optical pick-up based on the calculated result (S160). The required length of de-track of the optical pick-up can be calculated based on a distance from the center of curvature of the disk surface to the center of the optical pick-up which is moved to a searched position.

In the present embodiment, the necessary information for tilt compensation is pre-measured when reading-in a disk, and required length of de-track of the optical pick-up is determined based on the pre-measured information when the optical pick-up moves to a searched position. Of course, the necessary information for tilt compensation such as curvature information of disk surface or distance information between the disk and the optical pick-up can be calculated later, after the optical pick-up is moved to the searched position. If the latter is applied, however, it is far more difficult and complicated to get the information. Therefore, the former method is preferred to the latter method.

The control part then determines whether the curvature of disk surface is concave or convex (S170) to decide the direction of de-track. If the surface is concave, the control part performs a positive de-tracking process (S171), and if the surface is convex, the control part performs a negative de-tracking process (S172) . The wording of 'positive de-track' means that the de-tracking of the optical pick-up is directed toward an outer circumference of the disk, and the 'negative de-track' means that the de-tracking of the optical pick-up is directed toward a center of the disk.

The control part checks the size of a spot focused on a disk surface while enlarging the spot according to the calculated length and direction of de-track (S180). This step aims to confirm the final result of tilt compensation. In the present embodiment, for instance, de-track is stopped when the spot size is the largest (that is, the most optimum), and tilt compensation is finished (S200, S210). The spot size can be conventionally calculated via a photo diode which receives the amount of light reflected from the disk.

In the present embodiment, the spot size focused on a disk surface is calculated to determine whether the spot size is the largest, for confirming the result of tilt compensation. However, other methods can be applied. For instance, a jitter value may be calculated during de-track and a point having the least jitter may be determined to be the most suitable for recording and reproducing signals. In other ways, a point having the least Byte Error Rate (BER) with respect to a recording and reproducing bytes, or a point having the maximum RF envelope, may be used. It may be most preferable to fix the de-track when the following four conditions are all satisfied, which are: a point having the maximum spot size; a point having the minimum jitter value; a point having the least BER; and a point having the maximum RF envelop.

Additionally, the present invention provides the step (S190) of checking if an optical pick-up deviates out of the track during de-tracking, such as when an external impact occurs on an optical recording/reproducing apparatus, an optical pick-up is not moved in a requested direction, or the optical pick-up is wrongly operated, and this step is shown as XTOR in Figure 4.

The control part determines if XTOR is generated in the step of S190. If not, the control part proceeds to the step of S200, but if yes, the control part repeats the process from S120. The generation of XTOR means that an optical pick-up is not in the search position as instructed by a user's command, and therefore, the tilt compensation has to return to an initial step, that is, to the seek command step.

According to the exemplary embodiments of present invention as described above, mechanism-based tilt compensation, which performs a de-track to align the optical axis of an optical pick-up moved to a searched position with a center of curvature of disk surface in consideration of disk tilt, is performed together with a signal-based tilt compensation which makes a spot size the maximum. As such, recording and reproducing signal can be improved based on the optimal tilt compensation.

As aforementioned, a conventional tilt compensation method, which implements only a signal-based tilt compensation, has a limited compensation effect. However, the tilt compensation method according to the present invention also implements a mechanism-based tilt compensation in addition to the signal-based tilt compensation, and therefore, the applicable scope is so broad to cope with even an excessive tilt.

Although a few preferred embodiments have been shown and described, it will be appreciated by those skilled in the art that various changes and modifications might be made without departing from the scope of the invention, as defined in the appended claims.

## Claims

1. A tilt compensation method of an optical recording/reproducing apparatus which inclines an optical pick-up (12) depending on degrees of tilt to a position substantially perpendicular to a disk surface (10S), the tilt compensation method **characterised by:**
calculating a center of curvature of a disk surface (10S) on which the optical pick-up (12) is located to de-track the optical pick-up (12) to align the center of curvature with the optical axis of the optical pick-up (12).

2. The tilt compensation method according to claim 1, wherein the de-tracking comprises a positive de-tracking process which proceeds in a direction of an outer circumference of disk, and a negative de-tracking process which proceeds in a direction of a center direction of disk, and if the curvature of disk surface (10S) is concave, the positive de-tracking process is performed, and if the curvature of disk surface (10S) is convex, the negative de-tracking process is performed.

3. The tilt compensation method according to claim 2, wherein the de-tracking proceeds until satisfying all or one of:
a condition for optimum spot size focused on information-recording surface of disk surface (10S);
a condition for a least jitter detection;
a condition for a least byte error rate (BER) detection; and
a condition for a maximum RF envelope detection.

4. The tilt compensation method according to claim 3, further comprising checking whether a spot focused on a track deviates out of the track during de-tracking, and if so, the de-tracking is repeated.

## Patentansprüche

1. Verfahren zum Neigungsausgleich für ein optisches Aufzeichnungs- und Wiedergabegerät, das einen optischen Aufnehmer (12) abhängig vom Neigungsgrad in eine zu einer Plattenoberfläche (10S) im Wesentlichen senkrechte Position kippt, wobei das Verfahren zum Neigungsausgleich **dadurch charakterisiert** ist, dass man
ein Krümmungszentrum einer Plattenoberfläche (10S), auf der sich der optische Aufnehmer (12) befindet, berechnet, um die Spur des optischen Aufnehmers (12) zu revisionieren, um das Krümmungszentrum mit der optischen Achse des optischen Aufnehmers (12) auszurichten.

2. Verfahren zum Neigungsausgleich nach Anspruch 1, wobei die Spurrevision Folgendes umfasst: einen positiven Spurrevisions prozess, der in eine Richtung eines Außenumfangs der Platte abläuft, und einen negativen Spurrevisionsprozess, der in eine Zentrumsrichtung der Platte abläuft, und der positive Spurrevisionsprozess wird ausgeführt, wenn die Krümmung der Plattenoberfläche (10S) konkav ist, und der negative Spurrevisionsprozess wird ausgeführt, wenn die Krümmung der Plattenoberfläche (10S) konvex ist.

3. Verfahren zum Neigungsausgleich nach Anspruch 2, wobei die Spurrevision voranschreitet, bis alle oder eine der folgenden Bedingungen getroffen sind/ist:
eine Bedingung der auf die Informationsaufzeichnungsoberfläche der Plattenoberfläche (10S) fokussierten optimalen Fleckengröße;
eine Bedingung der Erkennung der geringsten Zitterbewegung;
eine Bedingung der Erkennung der geringsten Byte-Fehlerrate (BER); und
eine Bedingung einer maximalen RF-Hüllenkurvenerkennung.

4. Verfahren zum Neigungsausgleich nach Anspruch 3, weiterhin mit Folgendem: Überprüfen, ob ein auf einer Spur fokussierter Fleck während der Spurrevision aus der Spur gerät, und falls dem so ist, Wiederholen der Spurrevision.

## Revendications

1. Méthode de compensation d'inclinaison pour un appareil d'enregistrement et de reproduction optique, qui incline une tête de lecture optique (12) en fonction de degrés d'inclinaison dans une position substantiellement perpendiculaire à une surface (10S) d'un disque, la méthode de compensation d'inclinaison étant **caractérisée en ce que :**
l'on calcule un centre de courbure d'une surface (10S) d'un disque sur lequel la tête de lecture optique (12) est située pour dépointer la tête de lecture optique (12) pour aligner le centre de courbure avec l'axe optique de la tête de lecture optique (12).

2. Méthode de compensation d'inclinaison selon la revendication 1, dans laquelle le dépointage comprend un processus de dépointage positif qui a lieu dans une direction vers une circonférence extérieure du disque, et un processus de dépointage négatif qui a lieu dans une direction vers le centre du disque, et si la courbure de la surface (10S) du disque est concave, le processus de dépointage positif est effectué, et si la courbure de la surface (10S) du disque est convexe, le processus de dépointage négatif est effectué.

3. Méthode de compensation d'inclinaison selon la revendication 2, dans laquelle le processus de dépointage continue jusqu'à ce que toutes, ou l'une des conditions suivantes soient satisfaites :
une condition d'une taille de point optimale focalisée sur une surface d'enregistrement d'informations de la surface (10S) du disque ;
une condition de détection de moindre scintillement ;
une condition de détection d'un état de moindre taux d'erreur sur les bits (BER) ; et
une condition de détection d'une enveloppe RF maximale.

4. Méthode de compensation d'inclinaison selon la revendication 3, comprenant en outre la vérification pour savoir si un point focalisé sur une piste dévie de la piste au cours du dépointage, et si c'est le cas, le dépointage est répété.
